# EUROPEAN PATENT SPECIFICATION

(11) **EP 1 890 471 B1**
(45) Date of publication and mention of the grant of the patent: **14.12.2011**
(21) Application number: 06791271.7
(22) Date of filing: 19.10.2006
(51) Int. Cl.: H04M 3/42

(54) **A SYSTEM AND METHOD FOR SELECTING RING-BACK TONE IN REAL TIME**
SYSTEM UND VERFAHREN ZUM AUSWÄHLEN EINES RÜCKRUFTONES IN ECHZEIT
SYSTÈME ET PROCÉDÉ DE SÉLECTION D'UN SIGNAL DE RAPPEL EN TEMPS RÉEL

(30) Priority: 07.01.2006 CN 200610032734
(43) Date of publication of application: 20.02.2008
(73) Proprietor: Huawei Technologies Co., Ltd., Longgang District, Shenzhen Guangdong 518129 (CN)
(72) Inventor: PAN, Jianying, Shenzhen, Guangdong Province 518129 (CN); PAN, Jian, Shenzhen, Guangdong Province 518129 (CN)
(74) Representative: Thun, Clemens
(86) International application number: PCT/CN2006/002773
(87) International publication number: WO 2007/079635

(56) References cited:
- EP-A- 1 686 781
- WO-A-2005/006721
- CN-A- 1 556 643
- CN-A- 1 658 632
- JP-A- 11 225 186
- US-A- 4 577 067

## Description

This application claims the priority of CN Application No. 200610032734.3 filed on Jan.7, 2006, titled "A SYSTEM AND METHOD FOR SELECTING RING-BACK TONE IN REAL TIME".

### Field of the Invention

The present invention relates to a system and a method for providing a personalized ringback tone (also referred to as "color ring back tone") in the field of communications, in particular, to a system and a method for selecting a ringback tone in real time by a calling terminal during a ringback tone is played.

### Background of the Invention

With the unceasing development of communication technologies, the number of phone users, especially the number of mobile phone users, increases rapidly. To meet the personality requirements of different users, color ring back tone service has become a new service provided by the service provider. At present, color ring back tone service is not limited to the basic color ring back tone service, i.e., a color ring back tone subscriber customizes a color ring back tone and when a calling terminal calls the terminal of the subscriber, if the subscriber terminal is in idle state, the color ring back tone customized by the subscriber will be played to the calling terminal during the subscriber terminal rings. In addition, the color ring back tone service further includes time period-dependent color ring back tone, calling terminal number-dependent color ring back tone, specified number service, etc. In the above color ring back tone services, each called subscriber customizes a plurality of color ring back tones, and different color ring back tones will be provided to a calling terminal according to the time when the calling terminal initiates the call, the calling terminal number and the specified numbers.

In the above color ring back tone services, although the called user has customized a plurality of color ring back tones, for the calling user, he/she can passively listen to one color ring back tone set for the calling terminal during the called terminal rings, and no real-time selection can be made. If the called user does not answer the call in time for various reasons, the calling terminal may listen to the same color ring back tone repeatedly for a long time. This monotonic tone will also make the calling user displeased. Moreover, if the called user has customized one color ring back tone, it is inevitable for the calling user to listen to the same color ring back tone repeatedly for a long time, and the calling user cannot select to listen to the traditional ring back tone "beep... beep...".
WO2005/006721 discloses a method and apparatus for changing and pushing a sound source of supplementary service using a ring back tone on calling.

### Summary of the Invention

In view of the above disadvantages, the embodiments of the invention provide a system for selecting a ringback tone in real time, so that the calling user may easily select to listen to a ringback tone by pressing the keyboard on the calling terminal when a ringback tone is played.

Moreover, the embodiments of the invention further provide a method for selecting a ringback tone in real time, in which the calling user may listen to different ringback tones by inputting different push-button information.

To attain the above object, the present invention provides a system for selecting a ringback tone in real time. The system includes: a number receiver adapted to receive push-button information sent by a calling terminal when a ringback tone is played to the calling terminal and resolve the push-button information into received number information; and a controller adapted to control a ringback tone played to the calling terminal according to number of the called terminal and the received number information. Different ringback tones may be selected to play to the calling terminal according to different received number information.

Moreover, the present invention further provides a technical solution for a calling terminal to select to listen to a traditional ringback tone. In an implementation, the traditional ringback tone is recorded as a personalized ringback tone in the form of a song, and when the received number information is information indicating to select a traditional ringback tone, the traditional ringback tone song is delivered to the calling terminal in the same way as that of other personalized ringback tones. In another implementation, the controller further includes a received number information discriminator, and when the discriminator determines that the received number information is information indicating to select a traditional ringback tone, the controller stops playing the current personalized ringback tone, and an exchange device connected with the calling terminal transmits the traditional ringback tone to the calling terminal. In this case, if the called terminal has customized a personalized ringback tone, the calling user may select to listen to the traditional ringback tone according to his/her preference, thus further meeting the personality requirements of the user.

To attain the above object, the present invention provides a method for selecting a ringback tone in real time. The method includes: receiving push-button information sent by a calling terminal when a ringback tone is played to the calling terminal and resolving the push-button information into received number information; and controlling the ringback tone played to the calling terminal according to number of the called terminal and the received number information. There are two methods for controlling the ringback tone played to the calling terminal according to the number of the called terminal and the received number information. Method 1: stop playing the current ringback tone; retrieve a corresponding ringback tone code according to the number of the called terminal and the received number information, and convert the ringback tone code into corresponding address information; retrieve a corresponding ringback tone according to the address information; and play the corresponding ringback tone to the calling terminal. Method 2: stop playing the current ringback tone; determine whether the received number information is information indicating to select a traditional ringback tone; if yes, stop playing the current ringback tone to the calling terminal, and provide a traditional ringback tone by an exchange device connected with the calling terminal; if not, retrieve a corresponding ringback tone code according to the number of the called terminal and the received number information, and convert the corresponding ringback tone code into corresponding address information; retrieve a corresponding ringback tone according to the address information; and play the ringback tone to the calling terminal.

By using the above technical solutions, a calling user may easily select a personalized ringback tone customized by a user or select to listen to the traditional ringback tone in real time by pressing the keyboard of the terminal during the call connection. The calling user may listen to the ringback tone customized by the user flexibly. Therefore, it is avoided that the calling user has to passively and repeatedly listen to the ringback tone customized by the called user.

### Brief Description of the Drawings

Figure 1 is a structural representation of the system for selecting a ringback tone in real time according to the first embodiment of the invention;

Figure 2 is a structural representation of the system for selecting a ringback tone in real time according to the second embodiment of the invention;

Figure 3 is a flow chart of the method for selecting a ringback tone in real time according to the first embodiment of the invention; and

Figure 4 is a flow chart of the method for selecting a ringback tone in real time according to the second embodiment of the invention.

### Detailed Description of the Embodiments

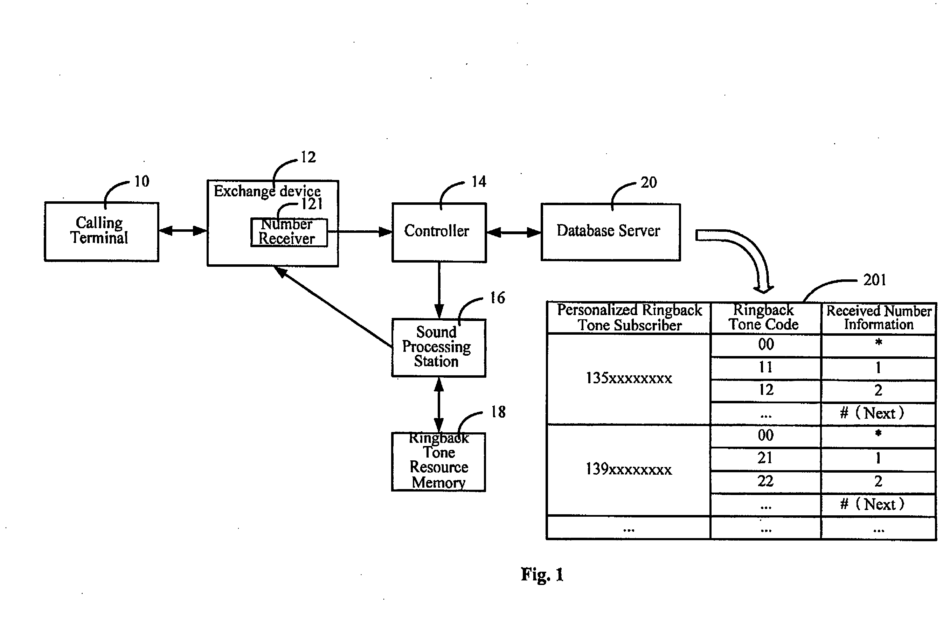

Figure 1 shows the structural representation of the system for selecting a ringback tone in real time according to the first embodiment of the invention. Usually, when a calling terminal 10 initiates a call to a called terminal, if the called terminal has customized a personalized ringback tone, the personalized ringback tone information will be delivered to the calling terminal 10, which indicates that a call signal has been transmitted to the called terminal via a PSTN (Public Switched Telephone Network) or a mobile communication network, and the state of the called terminal is idle.

In this embodiment, the calling user may select a ringback tone by pressing the keyboard on calling terminal 10 during a ringback tone is played, and the push-button information output from the keyboard on calling terminal 10, i.e., a dual tone-multiple frequency signal, is transmitted to a number receiver 121 in exchange device 12 that is connected with the calling terminal 10. The number receiver 121 is adapted to receive the push-button information and convert the push-button information into received number information that may be processed subsequently. A controller 14 is connected with the number receiver 121, for receiving the number of the called terminal and the received number information and controlling the ringback tone output to the calling terminal 10 according to the number of the called terminal and the received number information. A database server 20 is connected with the controller 14, for storing the user policy of various personalized ringback tone subscribers, as shown in Policy Table 201.

Policy Table 201 includes ringback tone codes customized by personalized ringback tone subscribers and the received number information corresponding to each code, as shown in Policy Table 201. Policy Table 201 illustrates an exemplary user policy. In the embodiments other than this embodiment, the user policy may be set as required. When the number of the called terminal received by the controller 14 is "135xxxxxxxx" and the received number information is "1", the controller 14 retrieves the corresponding ringback tone code "11" in the database server 20. In this case, the database server 20 converts ringback tone code "11" into the address information of the ringback tone corresponding to the code in a ringback tone resource memory 18 (as described below). A sound processing station 16 is connected with the controller 14, for receiving the address information corresponding to the ringback tone code output by the controller 14. The ringback tone resource memory 18 is connected with the sound processing station 16, for storing the ringback tone corresponding to each ringback tone code. Upon receiving the address information corresponding to the ringback tone code, the sound processing station 16 retrieves the corresponding ringback tone in the ringback tone resource memory 18 and plays the ringback tone to the calling terminal 10 via exchange device 12. Moreover, upon receiving the received number information output by the number receiver 121, the controller 14 may control the sound processing station 16 to stop playing the current ringback tone, and upon receiving the address information of the corresponding ringback tone again, the controller 14 retrieves the corresponding ringback tone in the ringback tone resource memory 18 and plays the ringback tone to the calling terminal 10 via exchange device 12. Therefore, the calling terminal 10 may select different ringback tones to play and switch between the different ringback tones.

In this embodiment, the traditional ringback tone is recorded as a personalized ringback tone in the form of a song, of which the corresponding ringback tone code is "00". When key "*" on calling terminal 10 is pressed, the traditional ringback tone will be played to the calling terminal 10. In this case, the traditional ringback tone is also taken as a personalized ringback tone, and played to the calling terminal in the same way as that of other personalized ringback tones.

Moreover, in the embodiments other than this embodiment, before the sound processing station 16 plays the ringback tone to the calling terminal 10 for the first time, a voice prompt is played for prompting the calling user to select different ringback tones by pressing the keyboard.

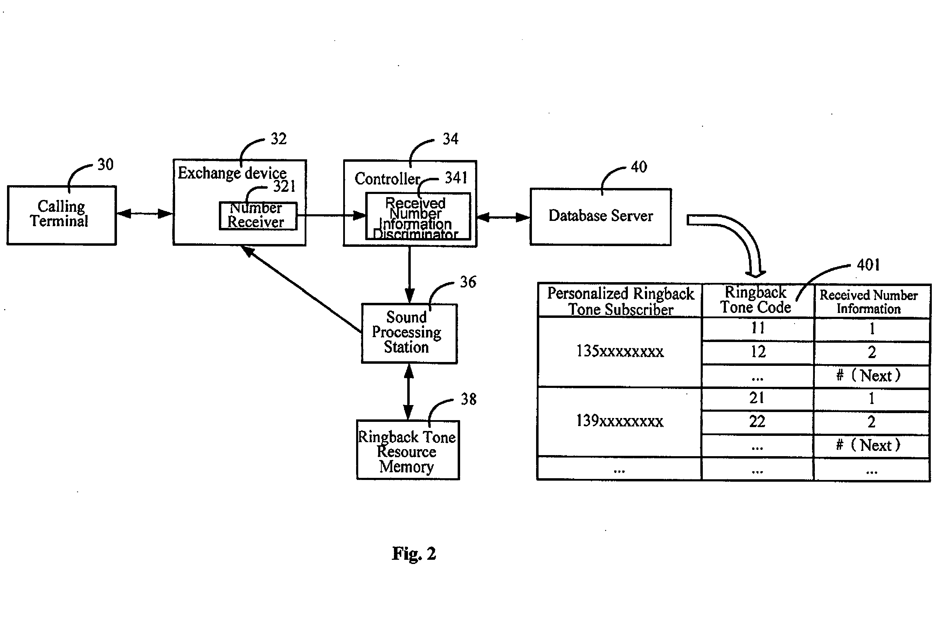

Figure 2 shows a structural representation of the system for selecting a ringback tone in real time according to the second embodiment of the invention. The functions and connection relations of a calling terminal 30, an exchange device 32, a number receiver 321, a sound processing station 36, a ringback tone resource memory 38 and a database server 40 are the same as those of the calling terminal 10, the exchange device 12, the number receiver 121, the sound processing station 16, the ringback tone resource memory 18 and the database server 20 in Figure 1, respectively. The difference lies in that a controller 34 includes a received number information discriminator 341, for determining whether the received number information is the information indicating to select a traditional ringback tone. If the received number information is the information indicating to select a traditional ringback tone, the controller 34 controls the sound processing station 36 to stop playing the current ringback tone, and the exchange device 32 transmits the traditional ringback tone to the calling terminal 30. If the received number information is not the information indicating to select a traditional ringback tone, the second embodiment of the invention adopts the same mechanism for playing ringback tone as that of the first embodiment.

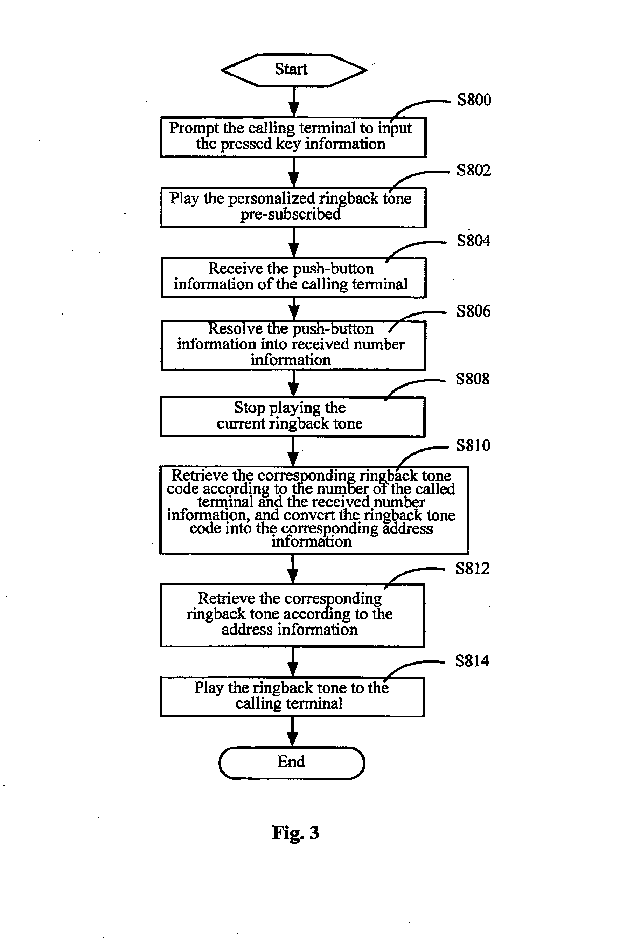

Figure 3 shows the flow chart of the method for selecting a ringback tone in real time according to the first embodiment of the invention. Step S800: the sound processing station 16 plays a voice prompt, for prompting the calling terminal 10 to input the push-button information. Step S802: the sound processing station 16 starts to play a personalized ringback tone pre-subscribed by the called user. Step S804: the number receiver 121 receives the push-button information of the calling terminal. Step S806: the number receiver 121 resolves the push-button information into received number information that may be processed subsequently. Step S808: upon receiving the received number information output by the number receiver 121, the controller 14 controls the sound processing station 16 to stop playing the current ringback tone. Step S810: the controller 14 retrieves the corresponding ringback tone code in the database server 20 according to the called terminal number and the received number information, and the database server 20 converts the ringback tone code into the address information of the corresponding ringback tone in the ringback tone resource memory 18. Step S812: the sound processing station 16 retrieves the corresponding ringback tone in the ringback tone resource memory 18 according to the address information of the ringback tone output by the controller 14. Step S814: the sound processing station 16 plays the ringback tone to the calling terminal via the exchange device 12.

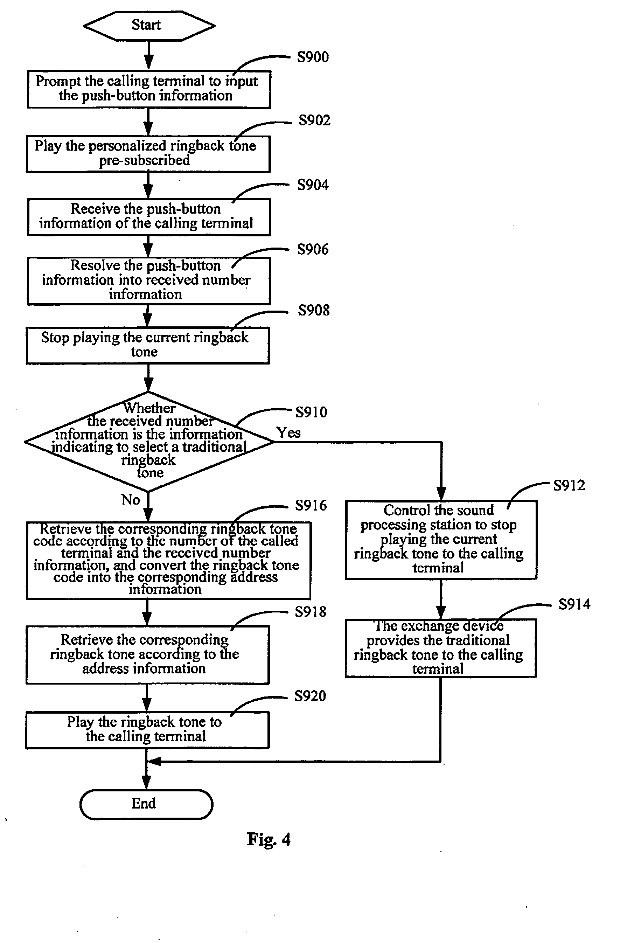

Figure 4 shows a flow chart of the method for selecting a ringback tone in real time according to the second embodiment of the invention. Step S900, Step S902, Step S904, Step S906 and Step S908 are the same as Step S800, Step S802, Step S804, Step S806 and Step S808 in Figure 3. The difference lies in that: in Step S910, the received number information discriminator 341 in the controller 34 determines whether the received number information is the information indicating to select a traditional ringback tone; in Step S912, if the received number information is the information indicating to select a traditional ringback tone, the controller 34 controls the sound processing station 36 to stop playing the current ringback tone to the calling terminal 30; in Step S914, the exchange device 32 provides the traditional ringback tone for the calling terminal 30; in Step S916, the controller 34 retrieves the corresponding ringback tone code in the database server 40 according to the number of the called terminal and the received number information, and converts the ringback tone code into the address information of the corresponding ringback tone in the ringback tone resource memory 38; in Step S918, the sound processing station 36 retrieves the corresponding ringback tone in the ringback tone resource memory 38 according to the address information output by the controller 34; and in Step S920, the sound processing station 36 plays the ringback tone to the calling terminal via the exchange device 32.

In conclusion, in the invention, when a ringback tone is played, the push-button information output by the calling terminal is received by a number receiver, and the ringback tone played to the calling terminal is changed dynamically according to different number of the called terminal and received number information. Moreover, if a called user has customized a ringback tone service, a calling terminal may still be able to select to listen to the traditional ringback tone.

## Claims

1. A system for selecting a ringback tone in real time, **characterized by** comprising:
a number receiver (121) adapted to receive push-button information sent by a calling terminal when a ringback tone is played to the calling terminal and resolve the push-button information into received number information; and
a controller (14) adapted to control a ringback tone played to the calling terminal according to number of the called terminal and the received number information.

2. The system according to claim 1, **characterized in that** the number receiver is configured in an exchange device.

3. The system according to claim 1, **characterized by** further comprising: a database server (20) adapted to store a policy and its corresponding ringback tone code of a personalized ringback tone subscriber, and convert the ringback tone code into address information of the corresponding ringback tone.

4. The system according to claim 3, **characterized in that** the policy of the personalized ringback tone subscriber comprises a policy corresponding to the received number information.

5. The system according to claim 4, **characterized in that** the controller may retrieve the address information of the corresponding ringback tone in the database server according to number of the called terminal and the received number information.

6. The system according to claim 5, **characterized by** further comprising:
a sound processing station (16) adapted to receive the address information;
a ringback tone resource memory (18) adapted to store ringback tones corresponding to various address information;
wherein, the sound processing station (16) is further adapted to retrieve a corresponding ringback tone in the ringback tone resource memory according to the address information, and play the corresponding ringback tone to the calling terminal via an exchange device.

7. The system according to claim 6, **characterized in that** the controller (14) is further adapted to control the sound processing station to stop playing a current ringback tone when the controller receives the received number information.

8. The system according to claim 6, **characterized in that** the sound processing station (16) is further adapted to play a voice prompt to the calling terminal, for prompting the calling user to input the push-button information.

9. The system according to claim 6, **characterized in that** the controller further comprises:
a received number information discriminator (341) adapted to determine whether the received number information is information indicating to select a traditional ringback tone; wherein
when the received number information discriminator (341) determines that the received number information is the information indicating to select a traditional ringback tone, the controller stops the ringback tone that is played currently, and the exchange device plays the traditional ringback tone to the calling terminal.

10. A method for selecting a ringback tone in real time, **characterized by** comprising:
receiving (804) push-button information sent by a calling terminal when a ringback tone is played to the calling terminal;
resolving (806) the push-button information into received number information; and
controlling (810) the ringback tone played to the calling terminal, according to number of the called terminal and the received number information.

11. The method according to claim 10, **characterized by** further comprising: playing (800) a voice prompt to the calling terminal for prompting the calling user to input the push-button information.

12. The method according to claim 10, **characterized in that** controlling the ringback tone played to the calling terminal comprises:
stopping (908) playing a current ringback tone;
retrieving (916) a corresponding ringback tone code according to the number of the called terminal and the received number information;
converting (916) the corresponding ringback tone code into an address information of corresponding ringback tone;
retrieves (918) the corresponding ringback tone according to the address information of the ringback tone; and
playing (920) the ringback tone to the calling terminal.

13. The method according to claim 10, **characterized in that** controlling the ringback tone played to the calling terminal comprises:
controlling a sound processing station to stop (908) playing a current ringback tone, upon receiving the received number information.

14. The method according to claim 10, **characterized in that** controlling the ringback tone played to the calling terminal comprises:
determining (910) that the received number information is information indicating to select a traditional ringback tone;
stopping (912) playing a current ringback tone; and
providing (914), by an exchange device, the traditional ringback tone to the calling terminal.

15. The method according to claim 14, **characterized in that** controlling the ringback tone played to the calling terminal further comprises:
determining (910) that the received number information is not information indicating to select a traditional ringback tone;
stopping (908) playing the current ringback tone;
retrieving (916) a corresponding ringback tone code according to the number of the called terminal and the received number information;
converting (916) the corresponding ringback tone code into an address information of corresponding ringback tone;
retrieving (918) the corresponding ringback tone according to the address information of the ringback tone; and
playing (920) the ringback tone to the calling terminal.

## Patentansprüche

1. System zum Auswählen eines Ruftons in Echtzeit, **gekennzeichnet durch**
einen Nummernempfänger (121), der dafür ausgelegt ist, Drucktasteninformationen zu empfangen, die **durch** ein anrufendes Endgerät gesendet werden, wenn im anrufenden Endgerät ein Rufton abgespielt wird, und die Drucktasteninformationen in empfangene Nummerninformationen aufzulösen; und
eine Steuerung (14), die dafür ausgelegt ist, einen dem anrufenden Endgerät abgespielten Rufton gemäß der Nummer des angerufenen Endgeräts und den empfangenen Nummerninformationen zu steuern.

2. System nach Anspruch 1, **dadurch gekennzeichnet, dass** der Nummernempfänger in einer Vermittlungseinrichtung konfiguriert ist.

3. System nach Anspruch 1, ferner **gekennzeichnet durch** einen Datenbankserver (20), der dafür ausgelegt ist, eine Richtlinie und ihren entsprechenden Ruftoncode eines Teilnehmers des personalisierten Ruftons zu speichern und den Ruftoncode in Adressinformationen des entsprechenden Ruftons umzusetzen.

4. System nach Anspruch 3, **dadurch gekennzeichnet, dass** die Richtlinie des Teilnehmers des personalisierten Ruftons eine Richtlinie umfasst, die den empfangenen Nummerninformationen entspricht.

5. System nach Anspruch 4, **dadurch gekennzeichnet, dass** die Steuerung die Adressinformationen des entsprechenden Ruftons in dem Datenbankserver gemäß der Nummer des angerufenen Endgeräts und den empfangenen Nummerminformationen abrufen kann.

6. System nach Anspruch 5, ferner **gekennzeichnet durch**
eine Klangverarbeitungsstation (16), die dafür ausgelegt ist, die Adressinformationen zu empfangen;
einen Ruftonbetriebsmittelspeicher (18), der dafür ausgelegt ist, den verschiedenen Adressinformationen entsprechende Ruftöne zu speichern;
wobei die Klangverarbeitungsstation (16) ferner dafür ausgelegt ist, einen entsprechenden Rufton in dem Ruftonbetriebsmittelspeicher gemäß den Adressinformationen abzurufen und dem anrufenden Endgerät den entsprechenden Rufton über eine Vermittlungseinrichtung abzuspielen.

7. System nach Anspruch 6, **dadurch gekennzeichnet, dass** die Steuerung (14) ferner dafür ausgelegt ist, die Klangverarbeitungsstation zu steuern, das Abspielen eines aktuellen Ruftons zu stoppen, wenn die Steuerung die empfangenen Nummerninformationen empfängt.

8. System nach Anspruch 6, **dadurch gekennzeichnet, dass** die Klangverarbeitungsstation (16) ferner dafür ausgelegt ist, dem anrufenden Endgerät eine Sprachaufforderung abzuspielen, um den anrufenden Benutzer dazu aufzufordern, die Drucktasteninformationen einzugeben.

9. System nach Anspruch 6, **dadurch gekennzeichnet, dass** die Steuerung ferner Folgendes umfasst:
einen Diskriminator (341) empfangener Nummerninformationen, der dafür ausgelegt ist, zu bestimmen, ob die empfangenen Nummerninformationen Informationen sind, die angeben, einen traditionellen Rufton auszuwählen; wobei
wenn der Diskriminator (341) empfangener Nummerninformationen bestimmt, dass die empfangenen Nummerninformationen die Informationen sind, die angeben, einen traditionellen Rufton auszuwählen, die Steuerung den Rufton, der gerade abgespielt wird, stoppt und die Vermittlungseinrichtung dem anrufenden Endgerät den traditionellen Rufton abspielt.

10. Verfahren zum Auswählen eines Ruftons in Echtzeit, **gekennzeichnet durch** die folgenden Schritte:
Empfangen (804) von Drucktasteninformationen, die **durch** ein anrufendes Endgerät gesendet werden, wenn dem anrufenden Endgerät ein Rufton abgespielt wird;
Auflösen (806) der Drucktasteninformationen in empfangene Nummerninformationen; und
Steuern (810) des dem anrufenden Endgerät abgespielten Ruftons gemäß der Nummer des angerufenen Endgeräts und den empfangenen Nummerninformationen.

11. Verfahren nach Anspruch 10, **dadurch gekennzeichnet, dass** ferner dem anrufenden Endgerät eine Sprachaufforderung abgespielt wird (800), um den anrufenden Benutzer aufzufordern, die Drucktasteninformationen einzugeben.

12. Verfahren nach Anspruch 10, **dadurch gekennzeichnet, dass** das Steuern des dem anrufenden Endgerät abgespielten Ruftons Folgendes umfasst:
Stoppen (908) des Abspielens eines aktuellen Ruftons;
Abrufen (916) eines entsprechenden Ruftoncodes gemäß der Nummer des angerufenen Endgeräts und den empfangenen Nummerninformationen;
Umsetzen (916) des entsprechenden Ruftoncodes in Adressinformationen des entsprechenden Ruftons;
Abrufen (918) des entsprechenden Ruftons gemäß den Adressinformationen des Ruftons; und
dem anrufenden Endgerät den Rufton abspielen (920).

13. Verfahren nach Anspruch 10, **dadurch gekennzeichnet, dass** das Steuern des dem anrufenden Endgerät abgespielten Ruftons Folgendes umfasst:
Steuern einer Klangverarbeitungsstation, das Abspielen eines aktuellen Ruftons zu stoppen (908), wenn die empfangenen Nummerninformationen empfangen werden.

14. Verfahren nach Anspruch 10, **dadurch gekennzeichnet, dass** das Steuern des dem anrufenden Endgerät abgespielten Ruftons Folgendes umfasst:
Bestimmen (910), dass die empfangenen Nummerminformationen Informationen sind, die angeben, einen traditionellen Rufton auszuwählen;
Stoppen (912) des Abspielens eines aktuellen Ruftons; und
Bereitstellen (914) des traditionellen Ruftons für das anrufende Endgerät durch eine Vermittlungseinrichtung.

15. Verfahren nach Anspruch 14, **dadurch gekennzeichnet, dass** das Steuern des dem anrufenden Endgerät abgespielten Ruftons ferner Folgendes umfasst:
Bestimmen (910), dass die empfangenen Nummerninformationen nicht Informationen sind, die angeben, einen traditionellen Rufton auszuwählen;
Stoppen (908) des Abspielens des aktuellen Ruftons;
Abrufen (916) eines entsprechenden Ruftoncodes gemäß der Nummer des angerufenen Endgeräts und den empfangenen Nummerninformationen;
Umsetzen (916) des entsprechenden Ruftoncodes in Adressinformationen des entsprechenden Ruftons;
Abrufen (918) des entsprechenden Ruftons gemäß den Adressinformationen des Ruftons; und
dem anrufenden Endgerät den Rufton abspielen (920).

## Revendications

1. Système de sélection d'une tonalité de retour d'appel en temps réel, **caractérisé en ce qu'**il comprend :
un récepteur (121) de numéro, conçu pour recevoir des informations de boutons-poussoirs transmises par un terminal appelant lorsqu'une tonalité de retour d'appel est jouée au terminal appelant, et résoudre les informations de boutons-poussoirs pour obtenir des informations de numéro reçu ; et
une unité de commande (14), conçue pour commander une tonalité de retour d'appel jouée au terminal appelant en fonction du numéro du terminal appelé et des informations de numéro reçu.

2. Système selon la revendication 1, **caractérisé en ce que** le récepteur de numéro est configuré dans un dispositif de central.

3. Système selon la revendication 1, **caractérisé en ce qu'**il comprend en outre : un serveur (20) de base de données, conçu pour mémoriser une politique et son code de tonalité de retour d'appel correspondant d'un abonné de tonalité de retour d'appel personnalisée, et convertir le code de tonalité de retour d'appel en des informations d'adresse de la tonalité de retour d'appel correspondante.

4. Système selon la revendication 3, **caractérisé en ce que** la politique de l'abonné de tonalité de retour d'appel personnalisée comprend une politique correspondant aux informations de numéro reçu.

5. Système selon la revendication 4, **caractérisé en ce que** l'unité de commande peut récupérer les informations d'adresse de la tonalité de retour d'appel correspondante dans le serveur de base de données en fonction du numéro du terminal appelé et des informations de numéro reçu.

6. Système selon la revendication 5, **caractérisé en ce qu'**il comprend en outre :
un poste (16) de traitement du son, conçu pour recevoir les informations d'adresse ;
une mémoire (18) de ressources de tonalités de retour d'appel, conçue pour mémoriser des tonalités de retour d'appel correspondant à diverses informations d'adresse ;
le poste (16) de traitement du son étant en outre conçu pour récupérer une tonalité de retour d'appel correspondante dans la mémoire de ressources de tonalités de retour d'appel en fonction des informations d'adresse, et jouer la tonalité de retour d'appel correspondante au terminal appelant par le biais du dispositif de central.

7. Système selon la revendication 6, **caractérisé en ce que** l'unité de commande (14) est en outre conçue pour commander le poste de traitement du son de façon à lui faire cesser de jouer une tonalité de retour d'appel en cours lorsque l'unité de commande reçoit les informations de numéro reçu.

8. Système selon la revendication 6, **caractérisé en ce que** le poste (16) de traitement du son est en outre conçu pour jouer un guide vocal au terminal appelant pour inviter l'usager appelant à entrer les informations de boutons-poussoirs.

9. Système selon la revendication 6, **caractérisé en ce que** l'unité de commande comprend en outre :
un discriminateur (341) d'informations de numéro reçu, conçu pour établir si les informations de numéro reçu sont des informations indiquant qu'il convient de sélectionner une tonalité de retour d'appel classique ;
si le discriminateur (341) d'informations de numéro reçu établit que les informations de numéro reçu sont les informations indiquant qu'il convient de sélectionner une tonalité de retour d'appel classique, l'unité de commande interrompt la tonalité de retour d'appel en coursment jouée, et le dispositif de central joue la tonalité de retour d'appel classique au terminal appelant.

10. Procédé de sélection d'une tonalité de retour d'appel en temps réel, **caractérisé en ce qu'**il comprend les étapes consistant à :
recevoir (804) des informations de boutons-poussoirs transmises par un terminal appelant lorsqu'une tonalité de retour d'appel est jouée au terminal appelant ;
résoudre (806) les informations de boutons-poussoirs pour obtenir des informations de numéro reçu ; et
commander (810) la tonalité de retour d'appel jouée au terminal appelant en fonction du numéro du terminal appelé et des informations de numéro reçu.

11. Procédé selon la revendication 10, **caractérisé en ce qu'**il comprend en outre l'étape consistant à :
jouer (800) un guide vocal au terminal appelant pour inviter l'usager appelant à entrer les informations de boutons-poussoirs.

12. Procédé selon la revendication 10, **caractérisé en ce que** l'étape consistant à commander la tonalité de retour d'appel jouée au terminal appelant comprend les étapes consistant à :
cesser (908) de jouer une tonalité de retour d'appel en cours ;
récupérer (916) un code de tonalité de retour d'appel correspondant en fonction du numéro du terminal appelé et des informations de numéro reçu ;
convertir (916) le code de tonalité de retour d'appel correspondant en des informations d'adresse de la tonalité de retour d'appel correspondante ;
récupérer (918) la tonalité de retour d'appel correspondante en fonction des informations d'adresse de la tonalité de retour d'appel ; et
jouer (920) la tonalité de retour d'appel au terminal appelant.

13. Procédé selon la revendication 10, **caractérisé en ce que** l'étape consistant à commander la tonalité de retour d'appel jouée au terminal appelant comprend l'étape consistant à :
commander un poste de traitement du son de façon à lui faire cesser (908) de jouer une tonalité de retour d'appel en cours lors de la réception des informations de numéro reçu.

14. Procédé selon la revendication 10, **caractérisé en ce que** l'étape consistant à commander la tonalité de retour d'appel jouée au terminal appelant comprend les étapes consistant à :
établir (910) que les informations de numéro reçu sont des informations indiquant qu'il convient de sélectionner une tonalité de retour d'appel classique ;
cesser (912) de jouer une tonalité de retour d'appel en cours ; et
appliquer (914), au moyen d'un dispositif de central, la tonalité de retour d'appel classique au terminal appelant.

15. Procédé selon la revendication 14, **caractérisé en ce que** l'étape consistant à commander la tonalité de retour d'appel jouée au terminal appelant comprend les étapes consistant à :
établir (910) que les informations de numéro reçu ne sont pas des informations indiquant qu'il convient de sélectionner une tonalité de retour d'appel classique ;
cesser (908) de jouer la tonalité de retour d'appel en cours ;
récupérer (916) un code de tonalité de retour d'appel correspondant en fonction du numéro du terminal appelé et des informations de numéro reçu ;
convertir (916) le code de tonalité de retour d'appel correspondant en des informations d'adresse de la tonalité de retour d'appel correspondante ;
récupérer (918) la tonalité de retour d'appel correspondante en fonction des informations d'adresse de la tonalité de retour d'appel ; et
jouer (920) la tonalité de retour d'appel au terminal appelant.
